# EUROPÄISCHE PATENTSCHRIFT

(11) **EP 2 752 699 B1**
(45) Veröffentlichungstag und Bekanntmachung des Hinweises auf die Patenterteilung: **31.07.2019**
(21) Anmeldenummer: 13197046.9
(22) Anmeldetag: 13.12.2013
(51) Int. Cl.: G02B 21/16, G01N 21/64, G02B 21/36, G02B 27/58

(54) **Verfahren zur hochauflösenden 3D-Lokalisierungsmikroskopie**
Method for high resolution 3D localisation microscopy
Procédé de microscopie de localisation 3D haute résolution

(30) Priorität: 21.12.2012 DE 102012224306
(43) Veröffentlichungstag der Anmeldung: 09.07.2014
(73) Patentinhaber: Carl Zeiss Microscopy GmbH, 07745 Jena (DE)
(72) Erfinder: Novikau, Yauheni, 07743 Jena (DE); Kalkbrenner, Thomas, 07745 Jena (DE)
(74) Vertreter: Loritz, Rainer

(56) Entgegenhaltungen:
- WO-A1-2009/115108
- WO-A2-2006/127692
- THOMPSON R E ET AL: "Precise nanometer localization analysis for individual fluorescent probes", BIOPHYSICAL JOURNAL, CELL PRESS, US, Bd. 82, Nr. 5, 1. Mai 2002 (2002-05-01), Seiten 2775-2783, XP002309230, ISSN: 0006-3495

## Beschreibung

Die Erfindung bezieht sich auf ein Verfahren zur hochauflösenden 3D-Lokalisierungsmikroskopie einer Fluoreszenzemitter enthaltenden Probe, bei dem die Fluoreszenzemitter in der Probe zur Abgabe von Fluoreszenzstrahlung angeregt werden und die Probe mit einer Ortsauflösung im Weitfeld abgebildet wird, die Anregung so bewirkt wird, dass bezogen auf die Ortsauflösung mindestens einige Fluoreszenzemitter isoliert sind, und in einer Lokalisierungsanalyse eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit bestimmt wird, die über die Ortsauflösung hinausgeht.

Die Erfindung bezieht sich weiter auf ein hochauflösendes Mikroskop zur 3D-Lokalisierungsmikroskopie einer Fluoreszenzemitter enthaltenden Probe, das eine Anregungseinrichtung, die ausgebildet ist die Fluoreszenzemitter in der Probe zur Abgabe von Fluoreszenzstrahlung anzuregen, und eine Abbildungseinrichtung aufweist, die ausgebildet ist, die Probe mit einer Ortsauflösung abzubilden, wobei die Anregungseinrichtung so ausgebildet ist, dass bezogen auf die Ortsauflösung mindestens einige Fluoreszenzemitter in der Abbildung isoliert sind, und das Mikroskop eine Lokalisierungsanalyseeinrichtung aufweist, die ausgebildet ist, eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit zu bestimmen, die über die Ortsauflösung hinausgeht.

Im Stand der Technik sind verschiedene Verfahren zur Überwindung der Beugungsgrenze in der Mikroskopie entwickelt worden. Aus der WO 2006/127692 oder der DE 102006021317 A1 ist ein mit PALM abgekürztes Verfahren (photo activated localization microscopy) bekannt, das eine Markierungssubstanz zur Abbildung einer Probe verwendet, welche z.B. mittels optischer Strahlung aktiviert werden kann. Nur im aktivierten Zustand kann die Markierungssubstanz bestimmte Fluoreszenzstrahlung abgeben. Nicht aktivierte Moleküle der Markierungssubstanz senden auch nach Einstrahlung von Anregungsstrahlung keine oder zumindest keine merkliche Fluoreszenzstrahlung ab. Man bezeichnet deshalb die Aktivierungsstrahlung allgemein als Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet ist, dass diese Markierungsmoleküle gemessen an der optischen Auflösung der Mikroskopie getrennt oder nachträglich durch Bildverarbeitungsverfahren trennbar sind. Man spricht davon, dass eine Teilmenge der Fluoreszenzemitter isoliert wird. Nach Aufnahme der Fluoreszenzstrahlung wird für diese isolierten Emitter dann das Zentrum deren auflösungsbegrenzt bedingter Strahlungsverteilung ermittelt. Daraus kann man rechnerisch die Lage der Moleküle mit höherer Genauigkeit bestimmen, als es die optische Auflösung eigentlich zulässt. Dieser Vorgang wird als Lokalisierung bezeichnet. Die gesteigerte Auflösung durch rechnerische Schwerpunktbestimmung der Beugungsverteilung wird in der englischen Fachliteratur auch als "super resolution" bezeichnet. Sie erfordert, dass in der Probe zumindest eine Teilmenge der aktivierten Markierungsmoleküle mit der optischen Auflösung unterscheidbar, also isoliert sind. Dann kann ihre Ortslage mit höherer Genauigkeit bestimmt werden, sie können lokalisiert werden.

Zum Isolieren einzelner Markierungsmoleküle nutzt das PALM-Prinzip statistische Effekte aus. Bei einem Markierungsmolekül, das nach Empfang des Umschaltsignals gegebener Intensität zur Fluoreszenzstrahlung anregbar ist, kann durch Einstellen der Intensität des Umschaltsignals dafür gesorgt werden, dass die Wahrscheinlichkeit in einem gegebenen Flächenbereich der Probe vorhandene Markierungsmoleküle zu aktivieren, so gering ist, dass es ausreichend Teilbereiche gibt, in denen innerhalb der optischen Auflösung nur unterscheidbare Markierungsmoleküle Fluoreszenzstrahlung emittieren.

Das PALM-Prinzip wurde hinsichtlich der Aktivierung der zu erfassenden Moleküle weitergebildet. So ist beispielsweise bei Molekülen, die einen langlebigen nicht fluoreszierenden und einen kurzlebigen fluoreszierenden Zustand aufweisen, ein separates Aktivieren mit spektral von der Anregungsstrahlung sich unterscheidender Aktivierungsstrahlung gar nicht erforderlich. Vielmehr wird die Probe zuerst mit Beleuchtungsstrahlung hoher Intensität so aktiviert, dass der weit überwiegende Anteil der Moleküle in den nicht fluoreszenzfähigen langlebigem Zustand (z. B. einen Triplet-Zustand) gebracht werden. Die verbleibenden, dann noch fluoreszierenden Moleküle sind dadurch hinsichtlich der optischen Auflösung isoliert.

Es sei auch noch angemerkt, dass das PALM-Prinzip in der Fachliteratur mittlerweile auch andere Abkürzungen erhalten hat, wie beispielsweise STORM etc. In dieser Beschreibung wird die Abkürzung PALM für alle Mikroskopieaufnahmen verwendet, die eine Ortsauflösung über die optische Auflösung der verwendeten Apparatur hinaus erreichen, indem Fluoreszenzmoleküle zuerst isoliert und dann lokalisiert werden. Das PALM-Verfahren hat den Vorteil, dass für die Beleuchtung keine hohe Ortsauflösung benötigt wird. Eine einfache Weitfeldbeleuchtung ist möglich.

Das PALM-Prinzip erfordert es, dass viele Einzelbilder der Probe aufgenommen werden, die jeweils Teilmengen aus isolierten Molekülen enthalten. Um die Probe zur Gänze abzubilden, muss die Menge aller Einzelbilder sicherstellen, dass möglichst alle Moleküle mindest einmal in einer Teilmenge enthalten waren. Das PALM-Verfahren benötigt deshalb regelmäßig eine Vielzahl von Einzelbildern, was eine gewisse Dauer für die Aufnahme eines Gesamtbildes bedingt. Damit ist ein erheblicher Rechenaufwand verbunden, da in jedem Einzelbild rechnerisch eine Vielzahl von Molekülen lokalisiert werden muss. Es fallen große Datenmengen an.

Diese Lokalisierungsgenauigkeit wird durch die Lokalisierung in Einzelbildern lediglich lateral erreicht, also in einer Ebene, die der Bildebene der Kamera zugeordnet ist. Die Verfahren sind also in dieser Hinsicht auf eine zweidimensionale Probenanalyse beschränkt. Man kombiniert das PALM-Prinzip deshalb mit einer TIRF-Anregung, welche sicherstellt, dass nur Fluorophore aus einer dünnen Schicht der Probe emittieren.

Einer der wichtigen Parameter beim PALM-Verfahren ist die Lokalisierungsunsicherheit Sie stellt einen Positionierungsfehler dar, mit dem der jeweilige, detektierte Fluoreszenzemitter im endgültigen Bild dargestellt wird. Insbesondere wenn in diesem Bild in einem nachfolgenden Verfahrensschritt Strukturen aufgefunden werden sollen, ist die Lokalisierungsunsicherheit ein wesentlicher Faktor. Die wissenschaftliche Literatur hat sich deshalb sehr früh der Frage gewidmet, wie die Lokalisierungsungenauigkeit ermittelt werden kann. Die Veröffentlichung Betzig et al., Science 313, 1642-1645, 2006, weist jedem lokalisierten Fluoreszenzemitter hinsichtlich der Ortsangabe eine 2D-Gaußverteilung zu, deren Standardabweichung dem ermittelten Positionierungsfehler entspricht. Die Genauigkeit, mit der ein Fluoreszenzemitter zweidimensional lokalisiert werden kann, wurde in der Veröffentlichung Thompson et al., Biophysical Journal 82, 2775, 2002, als Funktion der Pixelgröße, der Photonenzahl und der Intensität von Hintergrundstrahlung (im Stand der Technik auch als Hintergrundfluktuationen bezeichnet) abgeleitet. Weiter hängt die Ungenauigkeit der Lokalisierung von der endlichen Größe der Punktbildverwaschungsfunktion sowie der Pixelierung des Sensors ab. Die in dieser Veröffentlichung gegebene Ableitung wurde im Stand der Technik als zu optimistische Näherung, d. h. als eine Näherung, die zu geringe Lokalisierungsungenauigkeiten voraussagt, kritisiert. Hierzu sei auf die Veröffentlichung Williamson et al., Nature Immunology 12, 655, 2011, verwiesen. Besonders problematisch ist es jedoch, dass die Lokalisierungsungenauigkeitsangabe ausschließlich für die zweidimensionale Lokalisierungsmikroskopie verwendet werden kann. Sie kann deshalb nicht für Weiterbildungen der Lokalisierungsmikroskopie eingesetzt werden, welche lumineszierende Markierungsmoleküle auch in der dritten Raumrichtung, welche bezogen auf die Abbildung der Probe die Tiefenrichtung ist, ermöglicht, Hierzu sind aus dem Stand der Technik ebenfalls Ansätze bekannt. Unter "Tiefenrichtung" wird dabei die Richtung längs des Lichteinfalls, also längs der optischen Achse verstanden.

Die Publikation B. Huang et al., Science 319, Seite 810, 2008, beschreibt für das PALM-Prinzip einen Abbildungsstrahlengang, in dem eine schwache Zylinderlinse liegt, die zu einer gezielten astigmatischen Verzeichnung führt. Dadurch wird das Bild des Moleküls auf der Kamera elliptisch verzerrt, sobald sich das Molekül ober- oder unterhalb der Fokalebene, also des Symmetriepunktes der Punktbildverwaschungsfunktion befindet. Aus der Orientierung und der Stärke der Verzerrung lässt sich die Information über die Tiefenlage des lumineszierenden Markierungsmoleküls gewinnen. Ein Nachteil dieses Verfahrens liegt darin, dass auch die lokale Umgebung und die Orientierung eines molekularen Dipols zu einer Verzerrung des Bildes des lumineszierenden Markierungsmoleküls führen können, die mit der Tiefenlage nichts zu tun hat. Solchen lumineszierenden Markierungsmolekülen wird dann, je nach ihrer Orientierung, ein falscher Tiefenwert zugeordnet.

Die Veröffentlichung Pavani et al., PNAS 106, Seite 2995, 2009, schlägt vor, die Punktbildverwaschungsfunktion durch einen räumlichen Phasenmodulator in der Abbildung zu einer Doppelhelixstruktur zu modifizieren. Die Punktbilder einzelner, lumineszierender Markierungsmoleküle werden dann zu Doppelspots, ihre Tiefenlage ist in der Winkelorientierung der gemeinsamen Achse der Doppelspots kodiert.

Gemäß der Veröffentlichung von Shtengel et al., PNAS 106, Seite 3125, 2009, werden von den lumineszierenden Markierungsmolekülen emittierten Photonen mit sich selbst zur Interferenz gebracht. Dazu werden zwei in 4π-Konfiguration montierte Objektive verwendet, welche die lumineszierenden Markierungsmoleküle gleichzeitig beobachten. Die derart gewonnenen Teilstrahlengänge werden mittels eines speziellen Drei-Wege-Strahlteilers zur Interferenz gebracht. Jedes der damit erhaltenen Bilder wird mit einer Kamera detektiert. Die Intensitätsverhältnisse der Bilder geben Aufschluss über die Tiefenlage.

Die Publikationen Toprak et al., Nanolet. 7, Seiten 3285-3290, 2007 sowie Juette et al., Nature Methods 5, Seite 527, 2008, beschreiben einen Ansatz, bei dem ein 50/50-Strahlteiler in den Abbildungsstrahlengang eingebaut wird, der das Abbild der Probe in zwei Teilbilder aufspaltet. Diese zwei Bilder werden eigenständig detektiert. Zusätzlich wird in einem der damit erhaltenen Teilstrahlengänge eine optische Weglängendifferenz dergestalt eingeführt, dass sich aus den beiden Teilstrahlengänge zwei Objektebenen ergeben, die etwa um die halbe oder ganze optische Mindestauflösung (beispielsweise 700 nm) in z-Richtung, also Tiefenrichtung, auseinanderliegen. Die Tiefenposition von Markierungsmolekülen, die zwischen diesen beiden Ebenen liegen, ergibt sich nun durch Analyse der zwei Teilbilder desselben Markierungsmoleküls (z. B. hinsichtlich der Breite des Punktverwaschungsbildes) oder durch entsprechendes Fitten einer dreidimensionalen Punktbildverwaschungsfunktion. Das Verfahren erfordert zwei hochaufgelöste Teilbilder und eine präzise Justage der Strahlengänge und Kalibriermessungen, um eine sub-pixelgenaue Überlagerung der beiden Teilbilder zu erreichen. Weiter sind die beiden Teilbilder eines Markierungsmoleküls in der Regel von unterschiedlicher Form, da sich die laterale Ausdehnung der Punktbildverwaschungsfunktion eines abbildenden Systems in Abhängigkeit von der Lage der betrachteten Objektebene ändert.

Die DE 102009060490 A1, welche im übrigen weitere Literaturnachweise zur 3D-Hochauflösung aufführt, verfolgt ebenfalls den gattungsgemäßen Ansatz gemäß Toprak et al., das Abbild der Probe in zwei Teilbilder aufzuspalten.

Weitere Literatur zur hochauflösenden Lokalisierungsmikroskopie und insbesondere auch zu 3D-Lokalisierung findet sich in: Baddeley et al., Microscopy & Microanalysis 16, 64, 2010; Baddeley et al., PlosOne 6, e20645, 2011; Juette et al., Nature Methods 5, 527, 2008; Mlodzianoski et al., Optics Express 19, 15009, 2011; Mortensen et al., Nature Methods 7, 377, 2010; Owen et al., Journal of BioPhotonics 3, 446, 2010.

WO 2009/115108 A1 beschreibt auch ein Verfahren zur hochauflösenden 3D-Lokalisierungsmikroskopie einer Fluoreszenzemitter enthaltenden Probe gemäß dem Stand der Technik.

Der Erfindung liegt die Aufgabe zugrunde, ein Verfahren zur Bestimmung der Lokalisierungsungenauigkeit isolierter Fluoreszenzemitter anzugeben, das auch für die dreidimensionale Lokalisierungsmikroskopie geeignet ist.

Die Aufgabe wird in einer ersten Variante der Erfindung gelöst durch ein Verfahren zur hochauflösenden 3D-Lokalisierungsmikroskopie einer Fluoreszenzemitter enthaltenden Probe, bei dem die Fluoreszenzemitter in der Probe zur Abgabe von Fluoreszenzstrahlung angeregt werden und die Probe mit einer Ortsauflösung im Weitfeld abgebildet wird, die Anregung so bewirkt wird, dass bezogen auf die Ortsauflösung mindestens einige Fluoreszenzemitter isoliert sind, und in einer Lokalisierungsanalyse eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit bestimmt wird, die über die Ortsauflösung hinausgeht, wobei eine Lokalisierungsunsicherheitstabelle bereitgestellt wird, die eine Unsicherheit der Ortsangabe, und zwar zumindest hinsichtlich deren z-Koordinate als Funktion der z-Koordinate und einer Anzahl von Photonen, die bei der Abbildung im Weitfeld aufgesammelt wurden, angibt und für jeden lokalisierten Fluoreszenzemitter unter Zugriff auf die Lokalisierungsunsicherheitstabelle eine Ortsangabenunsicherheit für die in der Lokalisierungsanalyse bestimmte Ortsangabe ermittelt wird.

Die Aufgabe wird in der ersten Variante ebenfalls gelöst durch ein hochauflösendes Mikroskop zur 3D-Lokalisierungsmikroskopie einer Fluoreszenzemitter enthaltenden Probe, das eine Anregungseinrichtung, die ausgebildet ist die Fluoreszenzemitter in der Probe zur Abgabe von Fluoreszenzstrahlung anzuregen, und eine Abbildungseinrichtung aufweist, die ausgebildet ist, die Probe mit einer Ortsauflösung abzubilden, wobei die Anregungseinrichtung so ausgebildet ist, dass bezogen auf die Ortsauflösung mindestens einige Fluoreszenzemitter in der Abbildung isoliert sind, und das Mikroskop eine Lokalisierungsanalyseeinrichtung aufweist, die ausgebildet ist, eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit zu bestimmen, die über die Ortsauflösung hinausgeht, wobei die Lokalisierungsanalyseeinrichtung eine Lokalisierungsunsicherheitstabelle aufweist, die eine Unsicherheit der Ortsangabe, und zwar zumindest hinsichtlich deren z-Koordinate, als Funktion der z-Koordinate und einer Anzahl von Photonen, die von der Weitfeldkamera aufgesammelt wurden, angibt, und die Lokalisierungsanalyseeinrichtung ausgebildet ist, für jeden lokalisierten Fluoreszenzemitter unter Zugriff auf die Lokalisierungsunsicherheitstabelle eine Ortsangabenunsicherheit für die zuvor bestimmte Ortsangabe zu ermitteln.

Die Erfindung verwendet in der ersten Variante eine Lokalisierungsunsicherheitstabelle, die eine Unsicherheit zumindest hinsichtlich der z-Koordinate der Ortsangabe enthält. Die Erfinder erkannten, dass für diese Unsicherheit sowohl die z-Koordinate selbst als auch die Anzahl der Photonen, die bei der Abbildung des jeweiligen Fluoreszenzemitters im Weitfeld aufgesammelt wurden, ausschlaggebend sind. Beide Angaben sind aus der Lokalisierungsanalyse für jeden isolierten Fluoreszenzemitter bekannt. In der zweiten Variante wird die Lokalisierungsunsicherheit online durch eine Simulation ermittelt.

Die Unsicherheit der Lokalisierung (auch als Ortsangabe bezeichnet) wird durch das verwendete Gesamtsystem bestimmt, das sich aus Mikroskopoptik, Weitfeldabbildung und Algorithmus der Lokalisierungsanalyse zusammensetzt. Die damit erreichte Lokalisierungsgenauigkeit kann unabhängig von Annahmen oder Näherungen, wie sie beispielsweise Thompson et al. zur zweidimensionalen Lokalisierungsgenauigkeitsanalyse benötigten, experimentell bestimmt werden. Dazu können beispielsweise fluoreszierende Partikel mit einer Ausdehnung, die kleiner ist, als die Punktbildverwaschungsfunktion der verwendeten Abbildung vorgibt, mit gewünschten spektralen Eigenschaften (beispielsweise betreffend die Anregungs- und Emissionswellenlängen) so angeregt werden, dass sie Punktbilder in der Weitbildabbildung bereitstellen. Bildet man solche fluoreszierenden Partikel mehrmals im Weitfeld ab und führt die Lokalisierungsanalyse in jeder dieser Abbildungen durch, liefert die Streuung der einzelnen Ortsangaben direkt die mit dem System verbundene Lokalisierungsungenauigkeit. Alternativ kann auch die Streuung der Abweichungen zwischen den einzelnen Ortsangaben und dem wirklichen Ort des Partikels die Basis für die Lokalisierungsungenauigkeit sein. Der Algorithmus, welcher in der Lokalisierungsanalyse zum Einsatz kommt, liefert bei diesem Vorgehen eine Streuung, die von Zahl der Photonen, welche zu einem Bild beitrugen, abhängt. Um deshalb für ein Gesamtsystem eine Lokalisierungsunsicherheitstabelle aufzustellen, wird eine mehrdimensionale Tabelle erstellt, in welcher die Lokalisierungsunsicherheit als Funktion nicht nur der z-Koordinate, sondern auch der Photonenzahl N, die bei der Abbildung des jeweiligen Fluoreszenzemitters im Weitfeld aufgesammelt wurde, abgelegt wird. Weitere Parameter der Mikroskopiebildaufnahme, welche sich auf die Lokalisierungsgenauigkeit auswirken und deshalb in einer experimentellen Bestimmung der Lokalisierungsunsicherheitstabelle als Parameter berücksichtigt werden können, sind sogenannte Hintergrundfluktuationen, Parameter, weiche die Punktbildverwaschungsfunktion beschreiben, die x- und y-Position des jeweiligen Fluoreszenzemitters (um z. B. ortsabhängige Variationen der Punktbildverwaschungsfunktionen oder ortsabhängige Abberationen zu berücksichtigen), oder die Polarisation der Strahlung.

Die Hintergrundfluktuationen erfassen Photonen, die bei der Lokalisierungsanalyse auf ein betrachtetes Pixel fallen, jedoch nicht von dem lokalisierten Fluoreszenzemitter kommen. Dabei kann es sich um Photonen handeln, die in der Weitfeldabbildung detektiert wurden, obwohl sie physikalisch gar nicht vorhanden waren, also auf Rauscheffekte der Detektion (z. B. einer Weitfeldkamera) zurückzuführen sind. Es können aber auch physikalisch tatsächlich detektierte Photonen sein, die durch Streuprozesse o. ä. auf ein Pixel fielen und nicht von dem isolierten Fluoreszenzemitter stammen - beispielsweise von Fluoreszenzemittern aus anderen Tiefenebenen kommen.

Die Lokalisierungsunsicherheitstabelle kann experimentell ermittelt werden. Hierzu ist es bevorzugt, dass mindestes eine Kalibrierungsmessung an mindestens einem Kalibrierkörper durchgeführt wird, der Fluoreszenzemitter.

Es ist jedoch auch möglich, die Lokalisierungsunsicherheit durch eine Simulation zu ermitteln, welche die Wirkungen des Gesamtsystems auf die Lokalisierungsunsicherheit modellhaft betrachtet. Damit kann auch die Lokalisierungsunsicherheitstabelle bereit gestellt werden (erste Variante) oder die Lokalisierungsunsicherheit direkt berechnet werden (zweite Variante). In der Simulation wird von einem idealen, punktförmigen Fluoreszenzemitter mit entsprechender Ortsangabe ausgegangen. Das Bild dieses idealen Fluoreszenzemitters wird für eine vorgegebene Anzahl von Photonen die der Fluoreszenzemitter pro Bild abgibt, z. B. die mittlere Photonenzahl, simuliert. Anschließend wird dieses simulierte Bild mit einer Punktbildverwaschungsfunktion, die dem tatsächlichen Mikroskop möglichst entspricht, zu einem verbreiterten Bild modifiziert. Die Punktbildverwaschungsfunktion hängt dabei von der Ortsangabe ab, wie dies in realen Mikroskopen der Fall ist. Das verbreiterte Bild wird dann statistischen Rauscheinflüssen unterworfen und so zu einem verrauschten, verbreiterten Bild modifiziert. Die statistischen Rauscheinflüsse werden so simuliert, dass sie von der vorgegebenen Anzahl von Photonen abhängen. Das so erhaltene, verrauschte, verbreiterte Bild wird dann der Lokalisierungsanalyse unterzogen. Man erhält eine bevorzugt dreidimensionale Ortsangabe für das verrauschte, verbreiterte Bild. Dieser Prozess wird mehrfach wiederholt, wobei die einzeln erzeugten Bilder sich aufgrund der statistischen Rauscheinflüsse leicht unterscheiden und entsprechend die Fluoreszenzemitter unterschiedlich lokalisiert werden. Diese mehreren, z. B. 100, Bilder führen zu leicht unterschiedlichen Lokalisierungen, also simulierten Ortsangaben. Da die Photonen hinsichtlich der Unterschiede in den verrauschten Einzelbildern z. B. der Poisson-Statistik gehorchen, also nicht immer gleich auf die (simulierten) Pixel verteilt sind, und außerdem optional die Hintergrundfluktuationen b in jedem Einzelbild zu leicht unterschiedlichen Pixelhelligkeiten, ergibt sich für jedes Einzelbild eine andere Lokalisierung. Der Vergleich der simulierten Ortsangaben untereinander oder mit der vorgegebenen (tatsächlichen) Ortsangabe liefert die Unsicherheit der Ortsangabe. Nach Durchlauf dieser Schritte hat man eine Unsicherheitsangabe für eine vorgegebene Ortsangabe und eine vorgegebene Anzahl von Photonen.

Die Schritte werden deshalb ggf. für verschiedene Vorgaben der Anzahl von Photonen und für verschiedene Vorgaben der dreidimensionalen Ortsangabe wiederholt, um eine Lokalisierungsunsicherheitstabelle zu erhalten, die einen gewissen Wertebereich für die Ortsangabe und die Anzahl von Photonen abdeckt.

Um alternativ zu einer experimentellen Bereitstellung der Lokalisierungsunsicherheitstabelle eine Simulation einzusetzen, ist deshalb eine Weiterbildung des erfindungsgemäßen Verfahrens bevorzugt, die folgende Schritte aufweist:
a) ein Bild eines idealen, punktförmigen Fluoreszenzemitter wird für eine vorgegebene Anzahl von Photonen, die der Fluoreszenzemitter für ein Bild abgibt, insbesondere für eine mittlere Photonenanzahl, simuliert,
b) dieses simulierte Bild wird mit einer Punktbildverwaschungsfunktion zu einem verbreiterten Bild modifiziert, wobei die Punktbildverwaschungsfunktion bevorzugt abhängt von einer vorgegebenen Ortsangabe des Fluoreszenzemitters,
c) das verbreiterte Bild wird unter Berücksichtigung statistischer Rauscheinflüsse zu einem verrauschten, verbreiterten Bild modifiziert, wobei die statistischen Rauscheinflüsse abhängen von der vorgegeben Anzahl von Photonen,
d) das verbreiterte Bild wird der Lokalisierungsanalyse unterzogen, um eine simulierte Ortsangabe aus dem verrauschten, verbreiterten Bild zu gewinnen, und
e) Schritte b) bis d) werden für verschiedene Werte der statistischen Rauscheinflüsse mehrmals wiederholt, eine Streuung der daraus erhaltenen mehreren simulierten Ortsangaben oder eine Streuung von Unterschieden zwischen den mehreren simulierten Ortsangaben und der vorgegebenen Ortsangabe wird bestimmt und aus der Streuung wird die Unsicherheit der vorgegebenen Ortsangabe ermittelt,
f) die Schritte a) bis e) werden für verschiedene Vorgaben der Anzahl von Photonen und für verschiedene Vorgaben der dreidimensionalen Ortsangabe wiederholt.

Die Berücksichtigung des statistischen Rauschens kann in der Simulation (nach beiden Varianten) besonders bevorzugt durch eine Monte-Carlo-Simulation realisiert werden, die das verrauschte Bild stört. In jeder Wiederholung wird ein anderer Zustand der statistischen Störung verwendet. Besonders bevorzugt ist hierfür die Auswertung einer Poisson-Verteilung, deren (bekanntermaßen einziger) Parameter auf der vorgegebenen Anzahl von Photonen beruht. Besonders günstig hat sich hierbei die mittlere Photonenanzahl pro lokalisiertem Molekül erwiesen. Es wird also in jedem Durchlauf der Monte-Carlo-Simulation ein anderer statistischer Störzustand zur Modifikation des verrauschten Bildes, insbesondere hinsichtlich der Verteilung der Photonen auf die Bildpixel, verwendet, beispielsweise ein gemäß der Poisson-Verteilung erhaltener Wert.

Die erwähnte Simulation kann zusätzlich auch das Hintergrundrauschen bei der Weitbilddetektion berücksichtigen, wenn das simulierte Bild oder das verrauschte Bild zusätzlich mit Hintergrundrauschen versehen wird, das den erwähnten Hintergrundfluktuationen entspricht. Dabei kann entweder das Bild direkt mit einem Hintergrundrauschen versehen werden, oder das Hintergrundrauschen wird eigenständig statistischen Rauscheinflüssen unterzogen und dann mit dem aus Schritt b) enthaltenen Bild kombiniert. Eine gleichwertige Alternative ist es, die Punktbildverwaschungsfunktion mit einem Anteil zu versehen, der Hintergrundrauschen berücksichtigt.

Die Lokalisierungsunsicherheitstabelle muss verständlicherweise geeignet sein, Unsicherheitsangaben für den gesamten Wertebereich der berücksichtigen Parameter anzugeben, der bei einer Messung auftreten kann. Allgemein gesprochen deckt sie einen n-dimensionalen Parameterraum ab, indem sie eine (n-1)-dimensionale Oberfläche definiert. Diese Oberfläche ist durch vorgegebene Stützstellen des n-dimensionalen Parameterraums gegeben. Zweckmäßigerweise wird man die Zahl der Stützstellen möglichst gering halten wollen und für Parameterwerte, die zwischen Stützstellen liegen, eine Interpolation innerhalb der Lokalisierungsungenauigkeitstabelle durchführen. Für Parameterwerte, die außerhalb des erfassten Wertebereiches liegen, kommt eine Extrapolation in Frage. Um bei diesem Vorgehen den Fehler, der durch Interpolation oder Extrapolation entsteht, so gering wie möglich zu halten, ist es bevorzugt, die Lokalisierungsunsicherheitstabelle innerhalb der Lokalisierungsanalyse, welche die dreidimensionale Ortsangabe ermittelt, iterativ zu erzeugen oder zu erweitern, wobei ein iterationsschritt immer dann durchgeführt wird, wenn die Lokalisierungsanalyse Werte von Ortsangaben liefert und/oder für Anzahlen von Photonen durchgeführt wird, die von entsprechenden Stützstellen der Lokalisierungsunsicherheitstabelle um ein bestimmtes Mindestmaß beabstandet sind. Definiert man somit zuerst für die Eingangsparameter einen Wertebereich mit Schrittweiten, erzeugt die Lokalisierungsunsicherheitstabelle für diese Wertebereiche und Schrittweiten und ergänzt sie immer dann, wenn im aktuellen Betrieb eine Interpolation oder Extrapolation durchgeführt werden müsste, die von einer bereits existierenden Stützstelle zu weit beabstandet wäre. Ist dies der Fall, wird mittels Simulation die Lokalisierungsunsicherheitstabelle entsprechend ergänzt. Dies kann durchaus während der PALM-Gesamtbilderzeugung oder -Datenauswertung erfolgen.

Für die experimentelle Bestimmung der Lokalisierungsunsicherheitstabelle kann die Photonenzahl durch Variation der Leistung der Anregungsstrahlung, beispielsweise eine Laserleistung der Fluoreszenzanregung und durch geeignete Auswahl des Fluoreszenzemitters beeinflusst werden. Die Hintergrundfluktuationen können durch Variation des Beleuchtungswinkels verändert werden. Beispielsweise ist es möglich, eine TIRF-Beleuchtung, die wenig Hintergrund verursacht, mit einer EPI-Beleuchtung, die welche zu mehr Hintergrundstrahlung führt, in unterschiedlichen Zusammensetzungen zu kombinieren. Zusätzlich kann auch eine Anregungsintensitätsvariation und/oder eine Weitfeldbeleuchtung mit Weißlicht zur Variation der Hintergrundfluktuationen verwendet werden.

Die z-Position kann bei der experimentellen Bestimmung der Lokalisierungsunsicherheitstabelle durch Verfahren der Probe oder Verfahren des Objektivs, also allgemein durch ein Verändern der Relativlage zwischen Probe und Objektiv modifiziert werden.

Gleiches gilt für die x-/y-Position, die zusätzlich noch durch Auswahl des Fluoreszenzemitters variiert werden kann. Durch derartige experimentelle Beeinflussungen kann ein Wertebereich der vorgegebenen Parameter erfasst werden, um die Lokalisationsunsicherheitstabelle mit ausreichend dichtend und zahlreichen Stützstellen zu erzeugen.

Soweit nachfolgend Verfahrensschritte erläutert werden, können diese durch einen entsprechenden Betrieb eines Mikroskops, das ein geeignet ausgebildetes Steuergerät aufweist, realisiert werden. Soweit also Verfahrensmerkmale geschildert werden, betreffen diese die geeignete Ausbildung eines Steuergerätes, beispielsweise durch ein geeignetes Betriebsprogramm. Umgekehrt gilt natürlich auch, dass Merkmale eines Steuergerätes, die beispielsweise durch entsprechende Programmiermittel erreicht sind, gleichermaßen Verfahrensmerkmale eines entsprechenden Betriebsverfahrens betreffen und offenbaren sollen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines Mikroskops zur Durchführung des PALM-Verfahrens,
- Fig. 2: einen Ablaufplan zur Erzeugung hochauflösender Bilder mit dem Mikroskop der Fig. 1 im PALM-Verfahren,
- Fig. 3: ein Ablaufdiagramm zur Erzeugung einer Lokalisierungsungenauigkeitstabelle, die im Verfahren der Fig. 2 verwendet wird,
- Fig. 4: ein Ablaufdiagramm für ein Verfahren zur experimentellen Bestimmung der Lokalisierungsungenauigkeitstabelle und
- Fig. 5: ein Ablaufdiagramm zur Erzeugung der Tabelle zumindest teilweise mittels einer Simulation alternativ oder ergänzend zum Verfahren gemäß Ablaufdiagramm Nr. 4.

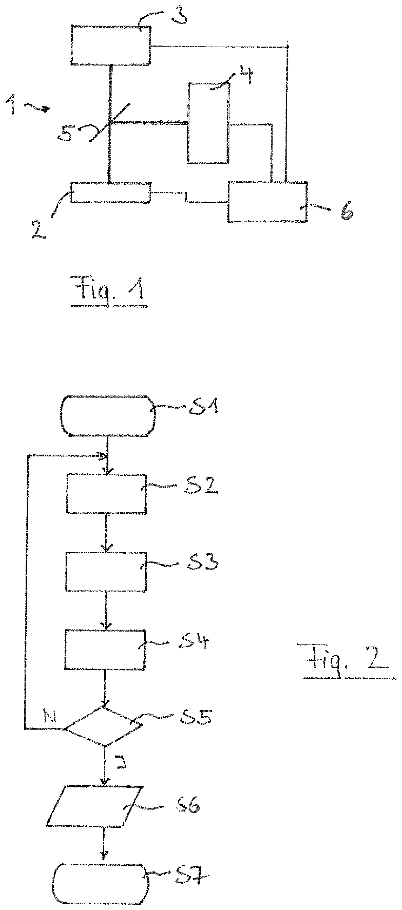

Figur 1 zeigt schematisch ein Mikroskop 1, das eine Probe 2 hochauflösend abbildet. Der Begriff hochauflösend wird hier, wie im Stand der Technik üblich, für ein Abbildungsverfahren verwendet, das eine Ortsauflösung aufweist, die über die Beugungsgrenze der Abbildung hinaus gesteigert ist. Das Mikroskop 1 dient zur Abbildung einer Probe 2, die Fluoreszenzemitter enthält. Mittels Strahlung aus einer Beleuchtungsstelle 3 werden die Fluoreszenzemitter zur Abgabe von Fluoreszenzstrahlung angeregt. Eine Weitbildkamera 4 bildet über einen Strahlteiler 5 die fluoreszierende Probe 2 ab. Der Betrieb des Mikroskops 1 wird von einem Steuergerät 6 gesteuert, das über entsprechende (nicht weiter identifizierte) Steuerleitungen mit einem Tisch, auf dem sich die Probe 2 befindet, der Weitfeldkamera 4 sowie der Beleuchtungsquelle 3 verbunden ist und das diese Elemente ansteuert bzw. Daten von ihnen aufnimmt, insbesondere Bilddaten der Weitfeldkamera.

Das Steuergerät 6 ist so ausgebildet, dass das Mikroskop 1 ein lokalisierungsbasiertes Mikroskopieverfahren, beispielsweise das PALM-Verfahren ausführt.

Der dabei durchgeführte Verfahrensablauf ist in Fig. 2 als Flussdiagramm dargestellt. Nach dem Start des Verfahrens in einen Schritt S1 wird in einem Anregungsschritt S2 die Probe 2 aus der Beleuchtungsquelle 3 beleuchtet, wobei dies so erfolgt, dass einzelne Fluoreszenzemitter bezogen auf die Ortsauflösung der Abbildung isoliert sind. Die Abbildung erfolgt in einem nachfolgenden Bildaufnahmeschritt S3, der ein Weitfeldbild der Probe liefert, indem zumindest einzelne Fluoreszenzemitter einen Abstand zu benachbarten Fluoreszenzemittern haben, der größer ist, als die Ortsauflösung der Weitfeldabbildung.

Ein anschließender Lokalisierungsschritt S4 bestimmt für diese isolierten Fluoreszenzemitter die Ortsangabe im Bild mit einer Ortsauflösung, die größer ist, als die Beugungsgrenze es eigentlich erlaubt. Dies kann dadurch erfolgen, dass im Lokalisierungsschritt S4 bekannt ist, dass die von einem isolierten Fluoreszenzemitter aufgenommene Strahlung eben nur von einem Fluoreszenzemitter stammt. Durch diese Kenntnis kann man den Ort, an dem sich der Fluoreszenzemitter befindet, mit einem größeren Genauigkeit ermitteln, als die Beugungsgrenze es zulässt. Vereinfacht kann man sich die im Lokalisierungsschritt S4 stattfindende Lokalisierungsanalyse so vorstellen, dass für das Beugungsscheibchen eines isolierten Fluoreszenzemitters der Schwerpunkt ermittelt wird, der dann die Ortsangabe darstellt. Für eine solche Lokalisierungsanalyse sind im Stand der Technik verschiedenste Ansätze bekannt, z. B. auch die im einleitenden Teil der Beschreibung genannten Veröffentlichungen.

Im Schritt S4 wird die Ortsangabe der isolierten Fluoreszenzemitter dreidimensional ermittelt, d. h. in einer Tiefenrichtung, die in Richtung der einfallenden Strahlung bzw. der Abbildung in der Probe 2 liegt, sowie einer senkrecht darauf liegenden x-/y-Ebene.

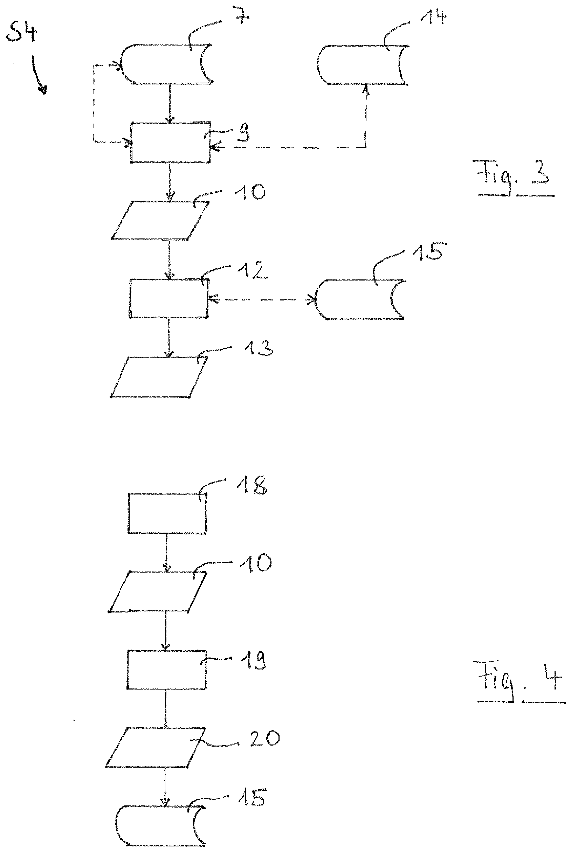

Im Lokalisierungsschritt S4 wird zusätzlich zur hochauflösenden Ortsangabe auch eine Lokalisierungsungenauigkeit bestimmt, die den Lokalisierungsfehler bei der Ermittlung der Ortsangabe wiedergibt. Auf die Bestimmung der Lokalisierungsungenauigkeit wird nachfolgend anhand der Figuren 3 bis 5 noch im Detail eingegangen werden.

Die einmalige Ausführung des Lokalisierungsschrittes S4 liefert nur für diejenigen Fluoreszenzemitter eine Ortsangabe, die im Weitfeldbild des zuvor durchgeführten Bildaufnahmeschrittes S3 isoliert sind. Um die Probe hinsichtlich möglichst aller Fluoreszenzemitter abzuführen, werden die Schritte S2 bis S4 deshalb mehrmals wiederholt, um möglichst alle Fluoreszenzemitter einmal in der Teilmenge der isolierten Fluoreszenzemitter zu haben. Es schließt sich deshalb an den Lokalisierungsschritt S4 ein Abtrageschritt S5 an, in dem überprüft wird, ob die Probe zu einem ausreichenden Grad abgebildet ist. Hierzu kann beispielsweise auf die Fülle der Ortsangaben, die aus allen vorherigen Durchleuchten des Lokalisierungsschrittes S4 erhalten wurden, zugegriffen werden. Eine derartige Abfrage ist für den Fachmann im Stand der Technik bekannt, da sie auch bei PALM-Verfahren oder anderen lokalisierungsbasierten Hochauflösungsverfahren, die ohne Ermittlung einer Ortsungenauigkeit arbeiten, stattfindet. Wurde die Probe hinreichend umfassend erfasst (J-Verzweigung), erfolgt in einem Schritt S6 die Bildausgabe. Andernfalls (M-Verzweigung) werden die Schritte S2 bis S4 erneut durchgeführt, wobei dafür gesorgt wird, dass beim nochmaligen Durchlauf möglichst andere Fluoreszenzemitter isoliert sind. Hierzu gibt es im Stand der Technik verschiedene Möglichkeiten, beispielsweise das Verwenden von Fluoreszenzemittern, die hinsichtlich ihrer Fluoreszenzanregbarkeit aus- oder eingeschaltet werden können usw. Auf den Stand der Technik in diesem Zusammenhang wird verwiesen.

Das gängigste (da einfachste) Verfahren besteht darin, zuerst alle Bilddaten aufzunehmen (und ggf. abzuspeichern) und dann die Prozessierung für jedes Einzelbild wie bisher beschrieben durchzuführen.

Nach Ausgabe des Gesamtbildes im Biidausgabeschritt S6 ist in einem Schritt S7 das Verfahren beendet, und die Probe 2 wurde mit einer Ortsauflösung abgebildet, welche über der optischen Abbildungsgrenze liegt, wobei für jede Ortsangabe eines Fluoreszenzemitters auch eine Ungenauigkeit angegeben ist. Diese Ungenauigkeit ist besonders vorteilhaft, wenn in einem (nicht im Flussdiagramm dargestellten) weiteren Schritt Strukturen im Gesamtbild identifiziert werden.

Wie bereits erwähnt, wird im Lokalisierungsschritt S4 für den isolierten Fluoreszenzemitter nicht nur eine Ortsangabe, sondern auch eine Unsicherheit der Ortsangabe ermittelt. Dies erfolgt zumindest in z-Richtung, d. h. in Tiefenrichtung, bevorzugt jedoch auch in den anderen beiden Koordinaten.

Fig. 3 zeigt ein Flussdiagramm für eine mögliche Ausführungsform des Lokalisierungsschrittes S4. In diesem Flussdiagramm sind Datenzugriffe durch gestrichelte Doppelpfeile veranschaulicht. Ausgangspunkt für den Lokalisierungsschritt S4 sind die Kamera-Rohdaten 7, die vom vorherigen Bildaufnahmeschritt S3 bereitgestellt wurden. Unter Zugriff auf diese Kamera-Rohdaten wird eine Lokalisierungsanalyse 9 durchgeführt, welche Ortsangaben für isolierte Fluoreszenzemitter liefert. Die Lokalisierungsanalyse 9 greift dabei auf Punktbildverwaschungsdaten 14 zu, welche beispielsweise das dreidimensionale Volumen, welches mit dem Mikroskop 1 aufgelöst werden kann, angibt.

Als Ergebnis der Lokalisierungsanalyse 9 erhält man Moleküldaten 10, welche Ortsangaben für isolierte Fluoreszenzemitter angeben. Die Moleküldaten 10 enthalten weiter für jeden isolierten Fluoreszenzemitter, d. h. für jede identifizierte Ortsangabe auf die Anzahl N der Photonen, die in der Lokalisierungsanalyse zur Ermittlung der Ortsangabe genau dieses Fluoreszenzemitters verwendet wurden. Die Anzahl N der Photonen ist aus der Lokalisierungsanalyse 9 bekannt; in der Regel ist sie bereits in den Kamera-Rohdaten 7 enthalten, die für jedes Pixel angeben, wie viele Photonen dort aufgesammelt wurden.

Weiter als Ergebnis der Lokalisierungsanalyse 9 sind Photonenzahlen bekannt, die Hintergrundfluktuationen b beschreiben. In der Regel ist dies eine mittlere Photonenanzahl, die pro isoliertem Fluoreszenzemitter detektiert wird, aber nicht auf Strahlung von diesem Fluoreszenzemitter zurückzuführen ist. Dies können virtuelle Photonen sein, also Photonen, die aufgrund von Rauschprozessen bei der Photonendetektion als detektiert angezeigt werden, oder reale Photonen, die aufgrund von Streuprozessen u. ä. nicht von den isolierten Fluoreszenzemittern stammen, jedoch in dem Volumen, das diesem Fluoreszenzemitter zugeordnet ist, fälschlicherweise detektiert wurden. Die Moleküldaten 10 enthalten also Ortsangaben sowie die Anzahl N an Photonen und eine Photonenanzahl betreffend Hintergrundfluktuationen b - und dies für jeden isolierten Fluoreszenzemitter. Die Daten betreffend die Hintergrundfluktuationen b können entfallen.

In einer nachfolgenden Ungenauigkeitsbestimmung 12 wird zumindest auf Basis der z-Koordinate und der Anzahl N der aufgesammelten Fluktuationen die Ortsungenauigkeit hinsichtlich der z-Koordinate ermittelt. Optional erfolgt dies auch auf Basis der x- und y-Koordinate, wenn man nicht mit der zu optimistischen Formel nach Thompson et al. arbeiten möchte. Auch werden die Hintergrundfluktuationen b verwendet. Dies kann jedoch entfallen.

In der Ungenauigkeitsbestimmung 12 wird auf eine Tabelle 15 zugegriffen, welche abhängig von dem erwähnten Eingangsparametern eine Ortsungenauigkeit ausgibt. In der Regel handelt es sich dabei um eine absolute Ortsungenauigkeit. Es ist dabei auch eine relative Ortsungenauigkeit bezogen auf den Abstand von einem absoluten Nullpunkt oder eine andere funktionell definierte Ortsungenauigkeit möglich. Dies hängt von Aufbau und Struktur der Tabelle 15 ab.

Als Ergebnis der Ungenauigkeitsbestimmung 12 liegen erweiterte Moleküldaten 13 vor. Sie unterscheiden sich von den Moleküldaten 10 durch die Ungenauigkeitsangabe, mindestens für die z-Koordinate, optional für die x- und/oder y-Koordinate der Ortsangabe des jeweiligen Fluoreszenzemitters.

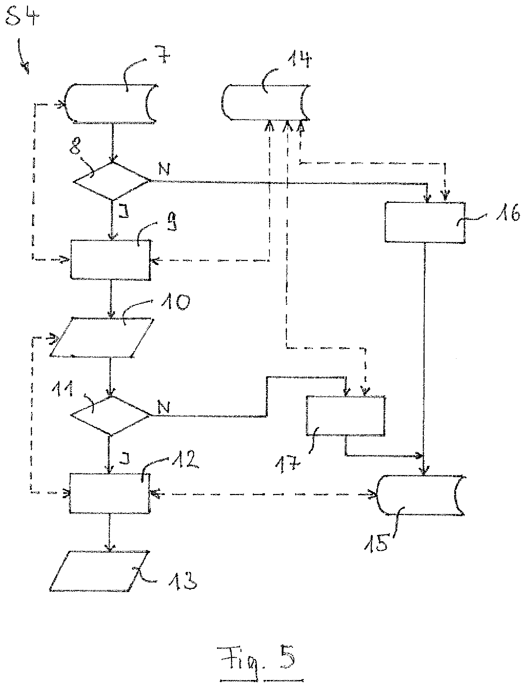

Die Tabelle 15, welche im Verfahren gemäß Figur 3 zur Anwendung kommt, kann experimentell ermittelt worden sein. Dies wird nachfolgend anhand der Figur 4 erläutert werden. Alternativ oder ergänzend dazu kann die Tabelle 15 auch durch eine Simulation gewonnen werden. Dies ist sowohl als kompletter Ersatz einer experimentellen Gewinnung möglich, als auch hinsichtlich einer Ergänzung einer experimentell ermittelten Grund-Tabelle, wenn im Verfahren festgestellt wird, dass die Stützstellendichte oder der Stützstellenbereich der experimentell ermittelten Tabelle 15 nicht ausreicht. Die experimentelle Tabellengewinnung wird nachfolgend anhand der Figur 4, die simulationsbasierte Tabellengewinnung anhand der Figur 5 erläutert werden.

Figur 4 zeigt ein Flussdiagramm zur experimentellen Bestimmung der Werte für die Tabelle 15. Vor Beginn dieses Verfahrens wird der Parameterraum und der Wertebereich für die Tabelle 15 festgelegt. Exemplarisch wird in der Beschreibung der Figur 4 davon ausgegangen, dass die Tabelle 15 die Parameter z, N und b, also die z-Koordinate, die Anzahl der für einen isolierten Fluoreszenzemitter aufgesammelten Photonen und ein Maß für die Hintergrundfluktuationen umfasst. Der Wertebereich für diese Parameter wird so gewählt, dass bei späteren Messungen zu erwartende Werte davon abgedeckt sind. Weiter wird eine Schrittweite für den Wertebereich festgelegt, wobei dies unter Berücksichtigung der experimentell zugänglichen Einstellmöglichkeiten erfolgt.

Dann wird, wie im allgemeinen Teil der Beschreibung bereits erläutert, für eine Kalibriermessung 18 ein Kalibrierkörper vorbereitet, der fluoreszierende Partikel mit einer Ausdehnung aufweist, die deutlich kleiner ist, als die kleinste, mit dem verwendeten Mikroskop auszulösende Struktur. Die fluoreszierenden Partikel haben also eine Ausdehnung unterhalb der Punkbildverwaschungsfunktion. Bekannte fluoreszierende Partikel sind beispielsweise sogenannte Quantenpunkte. Da eine Obergrenze für die Ausdehnung der fluoreszierenden Partikel bekannt ist, haben diese eine bekannte Ortsausdehnung. Weiter ist die Ortslage dieser Partikel genau bekannt.

In der Kalibriermessung 18 wird der Kalibrierkörper mehrfach abgebildet. In jedem dieser so erhaltenen Weitfeldbilder wird in einem Lokalisierungsschritt S3, der Bestandteil der Kalibriermessung 18 ist, die Ortsangabe für die fluoreszierenden Emitter gewonnen. Die fluoreszierenden Emitter sind weiter im Kalibrierkörper isoliert.

Man erhält so Moleküldaten 10 für die fluoreszierenden Partikel - und zwar für jede einzelne Aufnahme, die während der Kalibriermessung 18 gewonnen wurde. Die Werte für die Tabelle 15 können dann durch einen Vergleich der Ortsangaben, die in den Moleküldaten 10 für jedes Einzelbild gewonnen wurden und einem Vergleich mit den bekannten Ortsangaben ermittelt werden. Alternativ ist es möglich, die Daten der Tabelle 15 dadurch zu gewinnen, dass die Moleküldaten der Einzelbilder nur miteinander verglichen werden, um eine Standardabweichung der Ortsangabe zu ermitteln. Für diese Alternative muss die wirkliche Ortslage der fluoreszierenden Partikel gar nicht bekannt sein. Man benötigt dann für den Kalibrierkörper nur die Kenntnis, dass die fluoreszierenden Partikel eine Ortsausdehnung haben, die unterhalb der Auflösungsgrenze des Mikroskops liegt. Alternativ kann (s. o.) ein Vergleich mit der wirklichen Ortsangabe erfolgen.

Der Vergleich der Moleküldaten bedeutet in allen Fällen des experimentell durchgeführten Verfahrens, dass für jeweils isolierte Fluoreszenzemitter, die im beschriebenen Ausführungsbeispiel durch fluoreszierende Partikel realisiert sind, die Ortsangaben, hinsichtlich denen die Tabelle 15 die Ungenauigkeit angeben soll (im mindesten Fall die z-Koordinate) zwischen den aufgenommenen Einzelbildern untereinander oder mit der bekannten tatsächlichen Ortsangabe im Kalibrierkörper verglichen wird.

Die Kalibriermessung 18, die Erzeugung der Moleküldaten 10 und der Vergleich 19 wird für alle zuvor festgelegten Stützstellen des Wertebereiches im definierten Parameterraum durchgeführt. Zur Variation der entsprechenden Werte durch experimentelle Modifikation der Mikroskopie wird auf den allgemeinen Teil der Beschreibung verwiesen, der die entsprechenden Maßnahmen und Mittel bereits nannte.

Am Ende des Ablaufes gemäß Figur 4 steht die Tabelle 15, die bei der Ungenauigkeitsbestimmung 12 in Figur 3 zur Anwendung kommt.

Falls dabei Werte des Parameterraums auftreten, an denen die Tabelle 15 keine Stützstelle hat, wird innerhalb der Tabelle 15 interpoliert bzw. extrapoliert. Die Tabelle 15 kann auch ganz oder teilweise durch Simulationen erhalten werden.

Figur 5 zeigt ein entsprechendes Flussdiagramm, in dem Elemente, z. B. Daten etc., die denen der Figur 4 entsprechen, mit denselben Bezugszeichen versehen sind.

Das Flussdiagramm der Figur 5 zeigt detailliert den Schritt S4 der Figur 2, also den Lokalisierungsschritt. Dieser geht von den Kamerarohdaten 7 aus, die in der Bildaufnahme erzeugt wurden. Zuerst wird in einem Schritt 8 abgefragt, ob die Tabelle zur Angabe der Ortsangabeungenauigkeit bereits vorhanden ist. Ist diese nicht vorhanden (N-Verzweigung), wird mit einer Simulation 16 fortgefahren, die nachfolgend noch erläutert wird. Sie greift auf Punktbildverwaschungsdaten 14 zu und erzeugt die Tabelle 15. Da in diesem Zustand zuvor noch gar keine Tabelle vorhanden war, wird die Tabelle im vorbestimmten Parameterraum mit einem vorbestimmten Wertebereich und einer vorher festgelegten Stützstellendichte belegt bzw. erzeugt.

Ergibt die Abfrage 8, dass eine Tabelle bereits vorhanden ist, wird mit der J-Verzweigung zur Lokalisierungsanalyse gegangen. Die Tabelle 15 kann bereits vorhanden sein, entweder weil sie zuvor bereits in einer Simulation erzeugt wurde (z. B. wurde der Schritt 16 in einer früheren Ausführung des Schrittes S4 bereits durchgeführt) oder weil eine Lokalisierungstabelle bereits experimentell erzeugt wurde. Das Flussdiagramm der Figur 5 deckt also sowohl eine Variante ab, bei der die Tabelle 15 rein basierend auf Simulationen erzeugt wird, als auch Ausführungsformen, bei denen eine experimentell erzeugte Tabelle 15 durch Simulationen ergänzt wird.

Die Lokalisierungsanalyse 9 greift sowohl auf die Kamerarohdaten 7 als auch auf die Punktbildverwaschungsfunktion 14 zu. Sie liefert Moleküldaten 10, wie bereits geschildert. In einem Schritt 11 wird nun abgefragt, ob für diese Moleküldaten, d. h. für die entsprechenden Werte zumindest von z und n, optional jedoch auch zusätzlich für x, y und b im abgedeckten Wertebereich der Tabelle 15 liegen. Ist dies der Fall, (J-Verzweigung), wird in einem nächsten Schritt 12 die Ungenauigkeit bestimmt, wobei sowohl auf die Moleküldaten 10 als auch auf die Tabelle 15 zugegriffen wird. Als Ergebnis erhält man die erweiterten Moleküldaten 13.

Ergab die Abfrage im Schritt 11, dass die entsprechenden Werte entweder gänzlich außerhalb der Tabelle 15 liegen, oder die nächstgelegene Stützstelle in der Tabelle 15 zu weit beabstandet ist, wird in einem Schritt 17 wiederum eine Simulation ausgeführt. Sie entspricht im wesentlichen der Simulation 16, verwendet jedoch einen Wertebereich für den Parameterraum, der durch den Abfrageschritt 11 und die diesen zugrunde liegenden Moleküldaten 10 festgelegt ist. Auch diese Simulation 17 greift auf die Punktbildverwaschungsfunktion 14 zu. Sie ergänzt die bereits vorhandene Tabelle 16.

Die Simulation 16 oder 17 folgt den bereits im allgemeinen Teil der Beschreibung geschilderten Prinzipien.

Es wird also zuerst der Eingangsparameterraum mit den entsprechenden Wertebereichen festgelegt. Anschließend wird für jede Stützstelle, d. h. Ortsangabe (zumindest hinsichtlich der z-Koordinate) an der ein Wert für die Tabelle erzeugt werden soll, das Bild eines idealen, punktförmigen Emitters mit einer vorgegebenen Anzahl von Photonen simuliert und dann der Punktbildverwaschungsfunktion unterworfen, um ein verbreitertes Bild zu erhalten, das die Abbildungseigenschaften des verwendeten Mikroskops berücksichtigt. Dieses verbreiterte Bild wird unter Berücksichtigung statistischer Rauscheinflüsse zu einem verrauschten, verbreiterten Bild modifiziert, in dem die statistischen Rauscheinflüsse abhängig von der Photonenanzahl berücksichtigt werden. Dies kann in einer Simulation, z. B. Monte-Carlo-Simulation, erfolgen, wie im allgemeinen Teil der Beschreibung bereits erläutert wurde. Das verbreiterte, verrauschte Bild wird dann der Lokalisierungsanalyse unterzogen, was eine dreidimensionale Ortsangabe für dieses Bild liefert. Dieser Prozess wird für jeden einzelnen Parametersatz (z. B. z, N, b, x, y) k-mal wiederholt. Damit erhält man für die Simulation eines Fluoreszenzemitters k Lokalisierungen, die aufgrund der statistischen Einflüsse unterschiedlich sind. Man erhält folglich eine Wolke bestehend aus k Ortsangaben. Die Wolke ergibt durch Vergleich der Ortsangaben untereinander oder mit der bekannten Ortsangabe die Unsicherheit, z. B. nach Vorgabe einer Sigma-Grenze o. ä. Diese Schritte werden nun für jede Stützstelle der mehrdimensionalen Tabelle wiederholt, für welche die Simulation erfolgen soll. Der Unterschied zwischen den Simulationen 16 und 17 liegt somit wesentlich nur in der Wahl des Wertebereiches, für den die Simulation erfolgt.

Alternativ zur Verwendung einer Tabelle 15 wird in einem Verfahren ähnlich der Figur 5 für jede Ortsangabe zugehörige Ortsunsicherheit durch Simulation berechnet. Diese Ausführungsform entspricht dem Flussdiagramm der Figur 5 mit der Änderung, dass die Abfrage 8 entfällt und gleich mit der J-Verzweigung fortgefahren wird. Die Abfrage 11 entfällt ebenfalls. Es geht in die N-Verzweigung. Zudem wird das Ergebnis der Simulation 17 direkt in die Unsicherheitsbestimmung 12 transferiert, ohne dass die Tabelle 15 geschrieben würde.

## Patentansprüche

1. Verfahren zur hochauflösenden 3D-Lokalisierungsmikroskopie einer Fluoreszenzemitter enthaltenden Probe (2), bei dem
- die Fluoreszenzemitter in der Probe zur Abgabe von Fluoreszenzstrahlung angeregt werden und die Probe mit einer Ortsauflösung im Weitfeld (4) abgebildet wird,
- die Anregung so bewirkt wird, dass bezogen auf die Ortsauflösung mindestens einige Fluoreszenzemitter isoliert sind, und
- in einer Lokalisierungsanalyse (S3) eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit bestimmt wird, die über die Ortsauflösung hinausgeht,
**dadurch gekennzeichnet, dass**
- eine Lokalisierungsunsicherheitstabelle (15) bereitgestellt wird, die eine Unsicherheit der Ortsangabe, und zwar zumindest hinsichtlich deren z-Koordinate als Funktion der z-Koordinate und einer Anzahl von Photonen, die bei der Abbildung im Weitfeld (4) aufgesammelt wurden, angibt und
- für jeden lokalisierten Fluoreszenzemitter unter Zugriff auf die Lokalisierungsunsicherheitstabelle (15) eine Ortsangabenunsicherheit für die in der Lokalisierungsanalyse bestimmte Ortsangabe ermittelt wird.

2. Verfahren nach Anspruch 1, **dadurch gekennzeichnet, dass** die Lokalisierungsunsicherheitstabelle (15) bereitgestellt wird, indem mindestens eine Kalibiermessung an mindestens einem Kalibrierkörper durchgeführt wird, der Fluoreszenzemitter mit einer Ortsausdehnung aufweist, die unterhalb einer Auflösungsgrenze der Abbildung ist, und die bezogen auf diese Auflösungsgrenze isoliert sind.

3. Verfahren nach Anspruch 1, **dadurch gekennzeichnet, dass** die Lokalisierungsunsicherheitstabelle (15) durch eine Simulation bereitgestellt wird, die folgende Schritte aufweist:
a) ein Bild eines idealen, punktförmigen Fluoreszenzemitter wird für eine vorgegebene Anzahl von Photonen, die der Fluoreszenzemitter für ein Bild abgibt, insbesondere für eine mittlere Photonenanzahl, simuliert,
b) dieses simulierte Bild wird mit einer Punktbildverwaschungsfunktion (14) zu einem verbreiterten Bild modifiziert, wobei die Punktbildverwaschungsfunktion (14) bevorzugt abhängt von einer vorgegebenen Ortsangabe des Fluoreszenzemitters,
c) das verbreiterte Bild wird unter Berücksichtigung statistischer Rauscheinflüsse zu einem verrauschten, verbreiterten Bild modifiziert, wobei die statistischen Rauscheinflüsse abhängen von der vorgegeben Anzahl von Photonen,
d) das verbreiterte Bild wird der Lokalisierungsanalyse unterzogen, um eine simulierte Ortsangabe aus dem verrauschten, verbreiterten Bild zu gewinnen, und
e) Schritte b) bis d) werden für verschiedene Werte der statistischen Rauscheinflüsse mehrmals wiederholt, eine Streuung der daraus erhaltenen mehreren simulierten Ortsangaben oder eine Streuung von Unterschieden zwischen den mehreren simulierten Ortsangaben und der vorgegebenen Ortsangabe wird bestimmt und aus der Streuung wird die Unsicherheit der vorgegebenen Ortsangabe ermittelt,
f) die Schritte a) bis e) werden für verschiedene Vorgaben der Anzahl von Photonen und für verschiedene Vorgaben der dreidimensionalen Ortsangabe wiederholt.

4. Verfahren nach Anspruch 3, **dadurch gekennzeichnet, dass** in den Wiederholungen des Schritts c) das verrauschte Bild mit einer Monte-Carlo-Simulation gestört wird, wobei in jeder Wiederholung ein anderer Zustand statistischer Störungen verwendet wird, der bevorzugt durch Auswertung einer Poisson-Verteilung gewonnen wird, deren Parameter auf der vorgegebenen Anzahl von Photonen beruht.

5. Verfahren nach einem der Ansprüche 3 bis 4, **dadurch gekennzeichnet, dass** die Punktbildverwaschungsfunktion (14) aus experimentellen Untersuchungen oder theoretischen Modellen abgeleitet wurde.

6. Verfahren nach einem der Ansprüche 3 bis 5, **dadurch gekennzeichnet, dass** vor Schritt d) das Bild mit Hintergrundrauschen versehen wird, wobei bevorzugt das Hintergrundrauschen von der vorgegebenen Ortsangabe abhängt.

7. Verfahren nach einem der Ansprüche 5 bis 6, **dadurch gekennzeichnet, dass** die Lokalisierungsunsicherheitstabelle (15) innerhalb der Lokalisierungsanalyse (S3) iterativ erzeugt oder erweitert wird, wobei ein Iterationsschritt dann durchgeführt wird, wenn die Lokalisierungsanalyse (S3) Werte von Ortsangaben liefert und/oder für Anzahlen von Photonen durchgeführt wird, die von entsprechend bestehenden Werten der Lokalisierungsunsicherheitstabelle (15) um ein bestimmtes Mindestmaß beabstandet sind.

8. Verfahren nach einem der obigen Ansprüche, **dadurch gekennzeichnet, dass** die Lokalisierungsunsicherheitstabelle (15) die Unsicherheit weiter als Funktion mindestens eines der folgenden Parameter angibt: Fluktuationsintensität von Hintergrundstrahlung, die bei der Abbildung im Weitfeld (4) erfasst wurde, und Polarisation der Photonen, die für den jeweiligen isolierten Fluoreszenzemitter bei der Abbildung im Weitfeld (4) aufgesammelt wurden.

9. Verfahren nach einem der obigen Ansprüche, **dadurch gekennzeichnet, dass** die Lokalisierungsunsicherheitstabelle (15) auch die Unsicherheit hinsichtlich der x-Koordinate und der y-Koordinate der Ortsangabe als Funktion der x-Koordinate und der y-Koordinate angibt.

10. Verfahren nach einem der obigen Ansprüche, **dadurch gekennzeichnet, dass** auf Basis der Lokalisierungsunsicherheitstabelle (15) inter- oder extrapoliert wird, wenn die z-Koordinate und/oder Anzahl von Photonen für einen der lokalisierten Fluoreszenzemitter von entsprechenden Werten der Lokalisierungsunsicherheitstabelle (15) beabstandet sind.

11. Hochauflösendes Mikroskop zur 3D-Lokalisierungsmikroskopie einer Fluoreszenzemitter enthaltenden Probe, das
- eine Anregungseinrichtung (3), die ausgebildet ist die Fluoreszenzemitter in der Probe (2) zur Abgabe von Fluoreszenzstrahlung anzuregen, und eine Abbildungseinrichtung (4) aufweist, die ausgebildet ist, die Probe (2) mit einer Ortsauflösung abzubilden, wobei
- die Anregungseinrichtung (3) so ausgebildet ist, dass bezogen auf die Ortsauflösung mindestens einige Fluoreszenzemitter in der Abbildung isoliert sind, und das Mikroskop (1)
- eine Lokalisierungsanalyseeinrichtung (6) aufweist, die ausgebildet ist, eine dreidimensionale Ortsangabe, die in Tiefenrichtung der Abbildung eine z-Koordinate und orthogonal dazu eine x- und eine y-Koordinate umfasst, für jeden isolierten Fluoreszenzemitter mit einer Genauigkeit zu bestimmen, die über die Ortsauflösung hinausgeht,
**dadurch gekennzeichnet, dass**
- die Lokalisierungsanalyseeinrichtung (6) eine Lokalisierungsunsicherheitstabelle (15) aufweist, die eine Unsicherheit der Ortsangabe, und zwar zumindest hinsichtlich deren z-Koordinate, als Funktion der z-Koordinate und einer Anzahl von Photonen, die von der Weitfeldkamera (4) aufgesammelt wurden, angibt, und
- die Lokalisierungsanalyseeinrichtung (6) ausgebildet ist, für jeden lokalisierten Fluoreszenzemitter unter Zugriff auf die Lokalisierungsunsicherheitstabelle (15) eine Ortsangabenunsicherheit für die zuvor bestimmte Ortsangabe zu ermitteln.

12. Mikroskop nach Anspruch 11, dessen Lokalisierungsanalyseeinrichtung (6) zur Durchführung eines der Verfahren nach einem der Ansprüche 2 bis 10 ausgebildet ist.

## Claims

1. Method for high-resolution 3D localization microscopy of a sample (2) containing fluorescence emitters, in which
- the fluorescence emitters in the sample are excited to emit fluorescence radiation and the sample is imaged with a spatial resolution in wide field (4),
- the excitation is brought about such that at least some fluorescence emitters are isolated with respect to the spatial resolution, and,
- in a localization analysis (S3), a three-dimensional location designation, comprising a z-coordinate in the depth direction of the imaging and, orthogonally thereto, an x-coordinate and a y-coordinate, is determined for each isolated fluorescence emitter with an accuracy that goes beyond the spatial resolution,
**characterized in that**
- a localization uncertainty table (15) is provided, which states an uncertainty of the location designation, specifically at least with respect to the z-coordinate thereof, as a function of the z-coordinate and a number of photons which were collected during the imaging in wide field (4), and
- a location designation uncertainty for the location designation determined in the localization analysis is ascertained for each localized fluorescence emitter with access to the localization uncertainty table (15).

2. Method according to Claim 1, **characterized in that** the localization uncertainty table (15) is provided by performing at least one calibration measurement on at least one calibration body including fluorescence emitters that have a spatial extent that is below a resolution limit of the imaging and are isolated with respect to said resolution limit.

3. Method according to Claim 1, **characterized in that** the localization uncertainty table (15) is provided by a simulation having the following steps:
a) simulating an image of an ideal, point-shaped fluorescence emitter for a specified number of photons that the fluorescence emitter emits for an image, in particular for an average photon number,
b) modifying said simulated image with a point spread function (14) into a widened image, wherein the point spread function (14) is preferably dependent on a specified location designation of the fluorescence emitter,
c) modifying the widened image to a noisy, widened image, taking into account statistic noise influences, wherein the statistic noise influences are dependent on the specified number of photons,
d) subjecting the widened image to the localization analysis to obtain a simulated location designation from the noisy, widened image, and
e) repeating steps b) to d) a number of times for different values of the statistic noise influences, determining a spread of the plurality of simulated location designations obtained therefrom or a spread of differences between the plurality of simulated location designations and the specified location designation, and ascertaining the uncertainty of the specified location designation from the spread,
f) repeating steps a) to e) for different specifications of the number of photons and for different specifications of the three-dimensional location designation.

4. Method according to Claim 3, **characterized in that**, in the repetitions of step c), the noisy image is disturbed with a Monte Carlo simulation, wherein in each repetition a different state of statistical disturbances which is preferably obtained from evaluation of a Poisson distribution, the parameter of which is based on the specified number of photons, is used.

5. Method according to one of Claims 3 to 4, **characterized in that** the point spread function (14) was derived from experimental examinations or theoretical models.

6. Method according to one of Claims 3 to 5, **characterized in that** the image is provided with background noise before step d), wherein preferably the background noise is dependent on the specified location designation.

7. Method according to one of Claims 5 to 6, **characterized in that** the localization uncertainty table (15) is produced or expanded iteratively within the localization analysis (S3), wherein an iteration step is performed when the localization analysis (S3) provides values of location designation and/or is performed for numbers of photons which are spaced apart from correspondingly existing values of the localization uncertainty table (15) by a specific minimum.

8. Method according to one of the preceding claims, **characterized in that** the localization uncertainty table (15) indicates the uncertainty further as a function of at least one of the following parameters: fluctuation intensity of background radiation which has been captured during the imaging in wide field (4), and polarization of the photons which were collected for the respective isolated fluorescence emitter during the imaging in wide field (4).

9. Method according to one of the preceding claims, **characterized in that** the localization uncertainty table (15) also indicates the uncertainty with respect to the x-coordinate and the y-coordinate of the location designation as a function of the x-coordinate and the y-coordinate.

10. Method according to one of the preceding claims, **characterized in that** interpolation or extrapolation is performed on the basis of the localization uncertainty table (15) when the z-coordinate and/or number of photons for one of the localized fluorescence emitters are spaced apart from corresponding values of the localization uncertainty table (15).

11. High-resolution microscope for 3D localization microscopy of a sample containing fluorescence emitters, which
- includes an excitation device (3), which is embodied to excite the fluorescence emitters in the sample (2) to emit fluorescence radiation, and an imaging device (4), which is embodied to image the sample (2) with a spatial resolution, wherein
- the excitation device (3) is embodied such that at least some fluorescence emitters in the imaging are isolated with respect to the spatial resolution, and the microscope (1)
- includes a localization analysis device (6), which is embodied to determine a three-dimensional location designation, comprising a z-coordinate in the depth direction of the imaging and, orthogonally thereto, an x-coordinate and a y-coordinate, for each isolated fluorescence emitter with an accuracy that goes beyond the spatial resolution,
**characterized in that**
- the localization analysis device (6) includes a localization uncertainty table (15) which states an uncertainty of the location designation, specifically at least with respect to the z-coordinate thereof, as a function of the z-coordinate and a number of photons which were collected by the wide field camera (4), and
- the localization analysis device (6) is embodied to ascertain for each localized fluorescence emitter a location designation uncertainty for the previously determined location designation with access to the localization uncertainty table (15).

12. Microscope according to Claim 11, the localization analysis device (6) of which is embodied for performing one of the methods according to one of Claims 2 to 10.

## Revendications

1. Procédé de microscopie de localisation 3D à haute résolution d'un échantillon (2) contenant des émetteurs de fluorescence, selon lequel
- les émetteurs de fluorescence dans l'échantillon sont excités pour délivrer un rayonnement de fluorescence et l'échantillon est représenté avec une résolution spatiale dans le champ large (4),
- l'excitation est réalisée de telle sorte qu'au moins quelques émetteurs de fluorescence sont isolés en rapport avec la résolution spatiale et
- une indication d'emplacement tridimensionnelle, qui comprend, dans le sens de la profondeur de la représentation, une coordonnée Z et, orthogonalement à celle-ci, une coordonnée X et Y, est déterminée dans une analyse de localisation (S3) pour chaque émetteur de fluorescence isolé avec une précision qui va au-delà de la résolution spatiale,
**caractérisé en ce que**
- un tableau des incertitudes de localisation (15) est fourni, lequel indique une incertitude de l'indication d'emplacement, et ce au moins du point de vue de sa coordonnée Z, en fonction de la coordonnée Z et d'un certain nombre de photons qui ont été collectés dans le champ large (4) lors de la représentation et
- une incertitude d'indication d'emplacement pour l'indication d'emplacement déterminée dans l'analyse de localisation est spécifiée pour chaque émetteur de fluorescence localisé en accédant au tableau des incertitudes de localisation (15).

2. Procédé selon la revendication 1, **caractérisé en ce que** le tableau des incertitudes de localisation (15) est fourni en effectuant au moins une mesure d'étalonnage sur au moins un corps d'étalonnage qui possède des émetteurs de fluorescence ayant une étendue spatiale laquelle est inférieure à une limite de résolution de la représentation et lesquels sont isolés en référence à cette limite de résolution.

3. Procédé selon la revendication 1, **caractérisé en ce que** le tableau des incertitudes de localisation (15) est fourni par une simulation qui comprend les étapes suivantes :
a) une image d'un émetteur de fluorescence ponctuel idéal est simulée pour un nombre prédéfini de photons que délivre l'émetteur de fluorescence pour une image, notamment pour un nombre moyen de photons,
b) cette image simulée est modifiée avec une fonction de décoloration des pixels (14) en une image élargie, la fonction de décoloration des pixels (14) étant de préférence dépendante d'une indication d'emplacement prédéfinie de l'émetteur de fluorescence,
c) l'image élargie est modifiée en une image élargie chargée de bruit en tenant compte des influences statistiques du bruit, les influences statistiques du bruit étant dépendantes du nombre prédéfini de photons,
d) l'image élargie est soumise à l'analyse de localisation afin d'obtenir une indication d'emplacement simulée à partir de l'image élargie chargée de bruit, et
e) les étapes b) à d) sont répétées plusieurs fois pour différentes valeurs des influences statistiques du bruit, une dispersion des plusieurs indications d'emplacement simulées ainsi obtenues ou une dispersion des différences entre les plusieurs indications d'emplacement simulées et l'indication d'emplacement prédéfinie est déterminée, puis l'incertitude de l'indication d'emplacement prédéfinie est spécifiés à partir de la dispersion,
f) les étapes a) à e) sont répétées pour différentes prédéfinitions du nombre de photons et pour différentes prédéfinitions de l'indication d'emplacement tridimensionnelle.

4. Procédé selon la revendication 3, **caractérisé en ce que** dans les répétitions de l'étape c), l'image chargée de bruit est perturbée avec une simulation de Monte-Carlo, un état différent de perturbations statistiques étant utilisé dans chaque répétition, lequel est de préférence obtenu par interprétation d'une distribution de Poisson dont les paramètres s'appuient sur le nombre prédéfini de photons.

5. Procédé selon l'une des revendications 3 à 4, **caractérisé en ce que** la fonction de décoloration des pixels (14) a été dérivée d'analyses expérimentales ou de modèles théoriques.

6. Procédé selon l'une des revendications 3 à 5, **caractérisé en ce qu'**avant l'étape d), l'image est pourvue d'un bruit de fond, le bruit de fond dépendant de préférence de l'indication d'emplacement prédéfinie.

7. Procédé selon l'une des revendications 5 à 6, **caractérisé en ce que** le tableau des incertitudes de localisation (15) est généré ou étendu de manière itérative à l'intérieur de l'analyse de localisation (S3), une étape d'itération étant exécutée lorsque l'analyse de localisation (S3) délivre des valeurs d'indications d'emplacement et/ou étant alors exécutée pour des nombres de photons qui sont espacés d'une cote minimale définie des valeurs existantes correspondantes du tableau des incertitudes de localisation (15).

8. Procédé selon l'une des revendications précédentes, **caractérisé en ce que** le tableau des incertitudes de localisation (15) indique l'incertitude en plus en fonction d'au moins l'un des paramètres suivants : l'intensité de fluctuation du rayonnement d'arrière-plan qui est acquise lors de la représentation dans le champ large (4), et la polarisation des photons qui ont été collectés pour l'émetteur de fluorescence isolé respectif lors de la représentation dans le champ large (4).

9. Procédé selon l'une des revendications précédentes, **caractérisé en ce que** le tableau des incertitudes de localisation (15) indique également l'incertitude du point de vue de la coordonnée X et de la coordonnée Y de l'indication d'emplacement en fonction de la coordonnée X et de la coordonnée Y.

10. Procédé selon l'une des revendications précédentes, **caractérisé en ce que** le moment auquel la coordonnée Z et/ou le nombre de photons pour un des émetteurs de fluorescence localisés sont espacés des valeurs correspondantes du tableau des incertitudes de localisation (15) est interpolé ou extrapolé sur la base du tableau des incertitudes de localisation (15).

11. Microscope à haute résolution destiné à la microscopie de localisation 3D d'un échantillon contenant des émetteurs de fluorescence, lequel
- possède un dispositif d'excitation (3) qui est configuré pour exciter les émetteurs de fluorescence dans l'échantillon (2) en vue de délivrer un rayonnement de fluorescence, et un dispositif de représentation (4) qui est configuré pour représenter l'échantillon (2) avec une résolution spatiale,
- le dispositif d'excitation (3) étant configuré de telle sorte qu'au moins quelques émetteurs de fluorescence sont isolés dans la représentation en rapport avec la résolution spatiale, et le microscope (1)
- possèdant un dispositif d'analyse de localisation (6) qui est configuré pour déterminer, pour chaque émetteur de fluorescence isolé, une indication d'emplacement tridimensionnelle qui comprend, dans le sens de la profondeur de la représentation une coordonnée Z et, orthogonalement à celle-ci, une coordonnée X et Y, avec une précision qui va au-delà de la résolution spatiale,
**caractérisé en ce que**
- le dispositif d'analyse de localisation (6) possède un tableau des incertitudes de localisation (15) qui indique une incertitude de l'indication d'emplacement, et ce au moins du point de vue de sa coordonnée Z, en fonction de la coordonnée Z et d'un certain nombre de photons qui ont été collectés par la caméra à champ large (4) et
- le dispositif d'analyse de localisation (6) est configuré pour spécifier, pour chaque émetteur de fluorescence localisé en accédant au tableau des incertitudes de localisation (15), une incertitude d'indication d'emplacement pour l'indication d'emplacement déterminée précédemment.

12. Microscope selon la revendication 11, dont le dispositif d'analyse de localisation (6) est configuré pour mettre en oeuvre le procédé selon l'une des revendications 2 à 10.
